# EUROPEAN PATENT SPECIFICATION

(11) **EP 2 521 644 B1**
(45) Date of publication and mention of the grant of the patent: **02.01.2019**
(21) Application number: 11702704.5
(22) Date of filing: 04.01.2011
(51) Int. Cl.: B29D 11/00, B29C 43/02, B29C 43/18

(54) **FRESNEL LENS COATING PROCESS**
BESCHICHTUNGSVERFAHREN FÜR FRESNEL-LINSE
PROCÉDÉ DE REVÊTEMENT DE LENTILLE DE FRESNEL

(30) Priority: 04.01.2010 US 651646
(43) Date of publication of application: 14.11.2012
(73) Proprietor: Essilor International, 94220 Charenton-le-Pont (FR)
(72) Inventor: JIANG, Peiqi, Tarpon Springs Florida 34688 (US); WARREN, Lois, St Petersburg Florida 33705-5937 (US); WRIGHT, Danne, St Petersburg Florida 33709 (US); GOULET, Alain, F-94220 Charenton-le-pont (FR)
(74) Representative: Santarelli
(86) International application number: PCT/IB2011/050023
(87) International publication number: WO 2011/080726

(56) References cited:
- WO-A1-2009/141376
- US-A- 5 147 585

## Description

### Field of the Invention

The present application relates to a process for coating Fresnel lenses, and in particular for coating Fresnel lenses for ophthalmic lens applications, according to claim 1.

### Background of the Invention

There is an increasing interest in adopting Fresnel lenses which are diffractive lenses for certain ophthalmic applications in lieu of more conventional refractive lenses. Among the reasons for the increased interest in Fresnel lenses for ophthalmic applications is the increased lens optical power and/or reduced lens thickness.

One problem which has slowed the industrial development of Fresnel lenses for ophthalmic applications is related to their fabrication. A Fresnel lens conventionally has a so-called structured surface or side including a plurality of concentric ridges of different thickness and dihedral angles which collectively focus the lens. Fresnel lens like refractive lenses may have a variety of powers. The structured surface of the Fresnel lens can be provided on a planar, convex or concave side thereof.

While it is possible to use an uncoated Fresnel lens as an ophthalmic lens, an uncoated structured side is the source of a host of problems, relating to the structured surface or side of the lens which is both unsightly when worn and impractical from the standpoint of user care. To avoid such drawbacks it has been generally agreed that the structured surface or side of the Fresnel lens needs to be coated for reasons of aesthetics and ophthalmic lens care.

The coating of the structured surface or side of a Fresnel lens poses a significant problem in the fabrication of Fresnel lenses for ophthalmic applications. Conventional coating processes widely employed for coating ophthalmic lenses such as spin coating, dip coating or flow coating are inapplicable for coating the structured surface or side of a Fresnel lens because these coating processes cannot be adapted to produce acceptably smooth coated structured surfaces, substantially devoid of waviness.

Various techniques are known for use in making Fresnel lenses which include a layer overlying the structured surface of the Fresnel lens. These techniques include overmolding, casting and BST (back side transfer). Fresnel lens structures with a layer covering the structured surface are disclosed in EP 1 830 204, US2008/00947 and US2004/0263982. None of these disclose a fully satisfactory process for producing coated Fresnel lenses devoid of optical and cosmetic defects, especially when the Fresnel structure height of the lens is in excess of 30 µm.

The inventors have discovered that it is possible to achieve good quality coating of the structured surface or side of a Fresnel lens from the optical and cosmetic standpoints with a so-called press coating process such as disclosed in the assignee's published application EP 1 701 838 and counterpart U.S. published patent applications US2005140033 and US2007296094, the contents, of which are incorporated by reference.

The foresaid patent applications teach the coating of fined (or fine ground) lens blanks to avoid having to polish the lens blank which is a lengthy and costly step in the fabrication of ophthalmic lenses. The unpolished lens blank typically has a roughness (Rq) from 0.01 to 1.5 µm and most commonly about 0.5 µm. A cured coating 1 to 50 µm thick and more commonly less than 5 µm is applied to the unpolished fined lens surface in accordance with the press-coating process disclosed therein.

In the press coating process a requisite amount of a liquid, curable coating composition is deposited on a molding surface of a coating mold part or the unpolished fined surface of the lens blank to be coated. The molding surface of the mold part has a matching curvature to that of the unpolished fined surface of the lens blank. In practice the lens blank is mounted on a balloon, bladder or other inflatable membrane in communication with an air accumulator connected to a source of pressurized air. The pressurized air supplied to the accumulator expands the balloon or bladder to apply the lens blank against the matching surface of the mold surface with a pressure of about 84 kPa (or about 12.2 psi) thereby spreading the curable coating liquid uniformly over the unpolished fined lens blank surface. Thereafter the coating liquid is cured in situ and the pressure is released and the coated lens blank is removed from the mold. The resulting coated lens has very good light transmission and low haze and eliminates visible fining lines when examined with an arc lamp.

Given the topology of the structured surface of a Fresnel lens the press coating process for an unpolished fined lens blank surface is not directly applicable. In fact attempts at applying the press-coating process to the coating of the structured surface of side of a Fresnel lens revealed two kinds of defects, so-called cosmetic defects and optical defects.

These defects are caused by shrinking of the coating composition applied to the Fresnel lens blank during curing of the coating composition: the greater the Fresnel structure height the greater resulting shrinkage of the coating composition.

It is advantageous to have thin coating on Fresnel lenses in order to reduce the overall thickness of the resulting lens. But coatings not thick enough to cover satisfactorily the structured surface of the Fresnel lens blank produced surfaces which were not acceptably smooth to provide good optical quality. While good surface quality can be obtained with coatings of the order of 1 to 2 mm such coating thicknesses are detrimental to the desired reduced overall thickness of the lens.

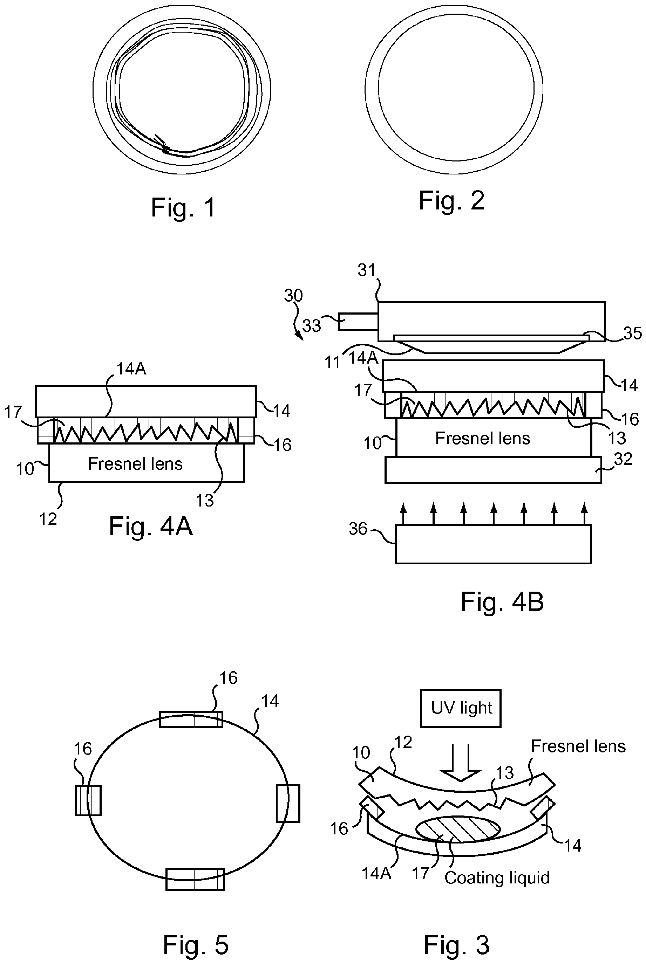

Another problem encountered was the formation of so-called cosmetic ring void defects, such as schematically illustrated in Fig. 1 which occurs in the peripheral region of the coated structured side of the Fresnel lens blank and consists of rings or non-circular irregular contour lines of variable radial distances from the centre of the lens blank such that the rings or contours lines intersect one another at one or more locations.

Another drawback in the current Fresnel lens technology is that it does not admit of high optical powers and in particular high Fresnel powers owing to limitations on the difference between the respective refractive indexes of the blank lens bulk material and the cured coating material which have unsatisfactory mechanical properties.

International patent application WO 2009/141376 discloses a method for applying a coating onto a Fresnel lens forming surface, according to the preamble of claim 1, and US patent 5,147,585 discloses a casting method for adding a multifocal or progressive region, also called segment, onto a preformed lens with a mold.

### Object and Summary of the Invention

It has been discovered that it is possible to obtain a good optical surface quality with an acceptably smooth coated structured surface, that is reduced surface roughness, without excessively thick coatings of the order to 1 or 2 mm, by adapting the coating to the height of the structured surface or Fresnel surface of the Fresnel lens. Specifically, by adopting coating thicknesses which are greater than about 1.5 times the height of structured surface, or the Fresnel structure height, but less than about 5.0 times the height of the structured surface, or Fresnel structure height, of the lens. In practice the resulting surface roughness can be made equal to or even less than 300 nm. This results in coating thicknesses in the range of about 100 to about 600 µm.

It has also been discovered that the cosmetic ring void defects resulted from the incident radiation striking the structured surface of the Fresnel which caused irregular shrinkage of the coating resin even when the thickness of the coating exceeded 2.0 times the Fresnel structure height and the cosmetic ring void defects could be totally eliminated by directing incident radiation, here UV radiation, at the Fresnel lens and not at the glass mold contrary to conventional curing procedure. In fact it has been found that the coatings in the range of thickness between about 100 and about 600 µm are particularly sensitive to shrinkage. It is believed that by directing the incident UV radiation to the Fresnel lens, the shrinkage develops in the direction opposite to that of the incident radiation. Thus with shrinkage developing from the smooth glass mold surface to the Fresnel structure surface, shrinkage is uniform and produced an acceptably smooth surface. As a result, no irregular shrinkage rings or ring void defects are visible. By contrast when the incident UV radiation is directed at the glass mold, the shrinkage of the coating liquid develops from Fresnel structure surface, again in a direction opposite to that of the incident radiation and results in visible irregular shrinkage rings or ring void defects caused by the development of shrinkage from the irregular Fresnel surface of the lens.

According to the invention there is provided a method for coating a Fresnel lens or lens blank, e.g. for use as ophthalmic lens blank, comprising providing an uncoated Fresnel lens blank having a structured surface and a non-structured surface, providing a transparent mold part having molding surface substantially matching the base curvature of the Fresnel lens, depositing a metered quantity of coating resin between the molding surface and the structured surface of the Fresnel lens, applying pressure between the Fresnel lens blank and the mold part while maintaining the distance between the molding surface and the structure surface so that the thickness of the coating is between about 1.5 and about 5 times the height of the structured surface, or the Fresnel surface height, and about 5 times of height of the structured surface, or Fresnel surface height, and curing the resin coating in situ by directing the incident UV radiation at the Fresnel lens side, not at the glass mold side; the incident UV radiation being directed at the non-structured surface of the Fresnel lens by a UV lamp disposed on the side of the Fresnel lens remote from the mold part, and not on the mold side.

According to the invention one or more the following features may also be adopted.

The pressure applied between the mold and the Fresnel lens blank may be between about 2 and about 5 psi (or about 13.8 and about 34.5 kPa).

The thickness of the coating may be between about 1.5 times the Fresnel structure height and about 3 times the Fresnel structure height.

The coating thickness may be between about 75 and 750 µm.

The Fresnel structure height of the Fresnel lens blank may be between about 20 µm and about 500 µm.

A plurality of circumferentially spacers may be disposed between the mold and the Fresnel lens having an axial length between about 80 µm and about 800 µm and particularly between about 100 µm and about 600 µm.

The difference in the refractive index of the Fresnel lens bulk material and the cured coating material may be greater than 0.06, or even greater than 0.05 and preferably greater than 0.09, or even greater than 0.15.

The refractive index of the cured coating material may be between about 1.45 and about 1.55, and even between 1.38 and 1.55) and the refractive index of the bulk material of the Fresnel lens blank is between about 1.59 and about 1.74.

According to a further feature, the difference in the refractive index of the Fresnel lens bulk material and the cured coating material may be greater than 0.06, or even greater than 0.05 and preferably greater than 0.09 or even 0.15.

The refractive index of the cured coating material may be between about 1.45 and about 1.55 and even between about1.38 and about 1.55 and the refractive index of the bulk material of the Fresnel lens blank may be between about 1.59 and about 1.74.

The coating formulations (or coating materials) may be UV curable compounds selected from the group consisting of UV curable (meth)acrylic compounds, epoxy acrylic compounds, epoxy compounds, polyurethane acrylic compounds, fluorinated acrylic compounds and any mixture of the aforesaid compounds. The Fresnel lens bulk material may be a thermoplastic or thermosetting transparent polymer, and preferably a thermoplastic polycarbonate or a thermosetting polymer formed by curing compounds comprising thiourethane group(s) and/or episulfur group(s).

The coated Fresnel lens may have a double coating, the inner coating having the desired optical properties such as an index of refraction less than about 1.50. and the outer coating having desirable mechanical properties such as hardness and surface smoothness. In an embodiment both the inner and overlying coatings are applied by press coating.

In an embodiment a metered quantity of coating material for the overlying coating is deposited between the inner coating and a molding surface of a mold part and pressure is applied between the Fresnel lens and the mold part while maintaining the distance between the molding surface and the inner coating for example with spacers of a height corresponding to the desired thickness of the overlying coating.

Typically the hardness of the inner coating may be between about 60 Shore A and about 90 Shore A and the surface roughness of the cured inner coating material may be between about 0.15 µm and about 1.5 µm and the surface roughness (Rq) of the cured overlying coating may be between about 0.01 µm and about 0.10 µm

The cured inner coating may have an index of refraction between about 1.38 and about 1.55 and more particularly between about 1.40 and about 1.50 to provide a wide range of optical powers.

The elastic modulus of the inner coating may be greater than 4 mPa and the elastic modulus of the overlying coating is greater than about 200 mPa.

The free thickness of the overlying coating (measured from the peaks of the Fresnel structure) may be between about 5 microns and about 100 microns.

In an embodiment the difference in the refractive index of the Fresnel lens bulk material and the cured inner or underlying coating material is between about 0.05 and about 0.40, and particularly between about 0.10 and about 0.35 and even more particularly between about 0.15 and about 0.30.

According to an embodiment the refractive index of the cured inner coating material is between 1.38 and 1.55 and the refractive index of the bulk material of the Fresnel lens blank is between 1.59 and 1.74.

The inner coating material may be UV curable fluorinated (meth) acrylate formulation such as MY-1375.

According to another aspect of the invention, a method for double-coating a Fresnel lens blank is provided comprising providing an uncoated Fresnel lens blank having a structure surface and a non-structured surface, providing a transparent mold part having molding surface substantially matching the base curvature of the Fresnel lens blank, depositing a metered quantity of inner coating material between the molding surface and the structured surface of the Fresnel lens blank, applying pressure between the Fresnel lens blank and the mold part while maintaining the distance between the molding surface, characterized in that the inner coating material entirely covers the Fresnel structure, the outer surface of the inner coating having a maximum waviness or peak-to-valley distance less than about 1 micron and pressure coating another curable coating material on the cured or partially cured inner coating to provide an overlying coating having superior mechanical properties and/or superior surface smoothness compared with the inner coating.

In such a method for double-coating a Fresnel lens blank the inner coating may be initially partially cured and may then be fully cured when curing the overlying coating after the latter has been pressure coated.

In such a method the cured inner coating material may have an index of refraction less than 1.40 and the cured overlying coating material may have an index of refraction of about 1.50.

According to another aspect of the invention there is provided a coated Fresnel lens blank comprising a Fresnel lens blank having a structured surface and a non-structured surface, a cured pressure-coated coating overlying the Fresnel structure surface and having a free thickness (beyond the peaks of the Fresnel structure) of at least 5 µm, and the coating having a shrinkage direction from the free face of the cured coating towards the structured surface of the Fresnel lens.

### Brief Description of the Drawings

Features and advantages of the present invention will be brought out in the following description, given by way of non-limiting examples, with reference to the accompanying drawings in which:
Fig. 1 is a schematic view of the coated structured surface of Fresnel lens blank to illustrate a cosmetic ring void defect, obtained by press coating conducted outside the conditions of the present invention;
Fig. 2 is a schematic view of a coated structured surface of Fresnel lens blank coating obtained by press coating according to the present invention;
Fig. 3 is an axial sectional schematic view of an arrangement for coating a Fresnel lens blank, in an open position after depositing a requisite amount of coating resin;
Fig. 4A is a highly schematic axial section of an arrangement for coating the structured surface of a Fresnel lens, after closing the molding assembly;
Fig. 4B is a highly schematic axial view of an arrangement for press coating the structured surface of a Fresnel lens;
Fig. 5 is a schematic top view of the mold part showing the arrangement of a plurality of spacers at the periphery of the mold part;
Fig. 6 is graph of surface roughness (Rq) of a central portion of a coated Fresnel lens blank having a Fresnel structure height of 120 µm and a coating thickness of about 100 µm ;
Fig. 7 is a graph of the surface roughness (Rq) in a 40mm peripheral range or area of a coated Fresnel lens blank having a Fresnel structure height of 120µm and a coating thickness of about 100 µm;
Fig. 8 is a graph of the surface roughness (Rq) in a 40 mm peripheral range or area of a coated Fresnel lens blank having a Fresnel structure height of about 80 µm and a coating thickness of about 90 µm;
Fig. 9 is a graph of the surface roughness (Rq) of a central portion of a coated Fresnel lens having a Fresnel structure height of about 120 µm and a coating thickness of about 360 µm, according to the present invention;
Fig. 10 is a graph of the surface roughness (Rq) in a 40 mm peripheral range or area of a coated Fresnel lens blank having a Fresnel structure height of about 80 µm and a coating thickness of about 240 µm, according to the present invention.
Fig. 11 is a schematic axial sectional schematic view of another embodiment for use in fabricating a double-coated Fresnel lens by press-coating an overlying coating on the inner or underlying coating of the Fresnel structured surface.
Fig. 12 is a schematic axial sectional view corresponding to Fig. 11 for coating with an overlying coating the coated structured surface of a Fresnel lens, after closing the molding assembly;
Fig. 13 is a schematic axial sectional view of the resulting double-coated Fresnel lens blank; and
Fig. 14 is a graph of .surface roughness of the double coated Fresnel lens

### Detailed Description of Embodiments of the Invention

The present Fresnel lens blank coating process is intended for Fresnel lens blanks in general and Fresnel lens blanks for ophthalmic purposes such eyeglass lenses in particular.

The lens blank bulk material may be any high refractive index (n_{D}) mineral glass or plastic material such as those widely used for the ophthalmic lenses and in particular polythiourethanes with a refractive index ranging from 1.60 to 1.67 or polymers formed from episulfide monomers with a refractive index of 1.74, available from Mitsui Chemistry Co. for example, or polycarbonates having a refractive index (n_{D}) of about 1.59.

The starting Fresnel lens blank 10 has a structured surface or side 11 having a plurality of concentric Fresnel ridges of suitable design to provide the desired optical properties such an optical power, Fresnel power or diffractive power, for example of suitable Fresnel lens designs.

The Fresnel structure or relief profile has a height or so-called Fresnel structure height which is measured between the base curve of the structured surface of the lens and the maximum peak of plurality of ridges defining the Fresnel surface. For ophthalmic applications the Fresnel structure height is preferably between about 20 µm and about 500 µm. The Fresnel power of an uncoated structured lens is preferably between +/-6 and +/-12 dioptres. Such a Fresnel lens may, for example, be injection molded.

The coating formulations for use in the invention are preferably those which are suitable for curing by UV irradiation. In a first embodiment the cured coating material preferably has a refractive index (n_{D}) between about 1.38 and about 1.55. In this first embodiment the coating material formulation is chosen so that the difference in the index of refraction between the Fresnel lens blank bulk material and the coating material is greater than 0.05 and preferably greater than 0.15. Thus, in this embodiment, for a Fresnel lens bulk material n_{D} of 1.60, the cured coating material n_{D} will be less than 1.55 and more preferably less than 1.50, for example about 1.45. Coating materials having such a low index also include (meth)acrylic monomers, epoxy acrylic monomers, polyurethane acrylic monomers, fluoro-acrylic monomers, epoxy monomers and polyurethane monomers and their mixtures.

Two coating formulations suitable for application in this embodiment of the present invention are formulations designated 311-83-L and 176-11, whose compositions are as follows:

| Components of formulation 311-83-L | % by mass |
|---|---|
| Alkoxylated cyclohexane dimethanol diacrylate | 49 % |
| Ddiethyleneglycol diacrylate | 39 % |
| 1,4-functional dentritic polyester acrylate blend | 10 % |
| MBOL | 2% |
| Genocure LTM/photoinitiator | 3% |

| Components of formulation 176-11 | % by mass |
|---|---|
| Dipentaerythritol hexaacrylate | 8.7 % |
| Dipropylene Glycol Diacrylate | 43.5 % |
| Alkoxylated Diacrylate | 17.4 % |
| 1,4 Butanediol Diacrylate | 26.1 % |
| MBOL | 1.7 % |
| Genomer LTM / photoinitiator | 2.6 % |

| | |
|---|---|
| where MBOL = 3-methyl-2-buten-1-ol. | |

Other formulations are of course possible. Such formulations will satisfy the following criteria, high transparency, low yellowness, low shrinkage, low or very low refractive index between about 1.38 and about 1.55, and curable by UV irradiation in a period less than 10 min., good mechanical properties such as hardness, toughness, impact resistance, permanent adherence to the structured surface of a Fresnel lens blank, and undelaminatable in normal use Such other possible formulations include monomers containing fluoro acrylic compounds. The coated Fresnel lens can furthermore be a conventional Rx or prescription surfaced or digital surfaced to get the desired lens power in association with the non-structured surface of the lens.

Application and curing of the coating composition is preferably carried out by the so-called press coating process mentioned above.

Fig. 4B illustrates, highly schematically, an apparatus suitable for carrying out the press-coating process on the structured surface 13 of a starting Fresnel lens blank 10 according to the first embodiment of the invention. The Fresnel lens blank (illustrated planar but in practice convex-concave) also has a non-structured surface 12. The Fresnel lens blank 10 is supported on a lens blank support 32. The lens blank support 32 which is transparent to UV radiation is fixed and the lens blank is removably mounted on the support by any suitable fastening means (not shown).

A substantially rigid mold part 14 has a molding surface 14A corresponding to the desired external or exposed surface of the coating and an outer surface 14B facing the press coating apparatus 30. The mold part 14 is made of mold glass composition suitable for molding ophthalmic lenses as is well known in the art. The press coating apparatus 30 for performing press coating comprises a fluid accumulator 31, such as an air accumulator, provided with a fluid port, here an air port 33, adapted to be connected to a source of pressurized air or other suitable fluid (not shown) for introducing pressurized fluid into the accumulator and for evacuating the pressurized air from the accumulator. The accumulator may have a flexible membrane or bladder 35 adapted to bear against the side of the mold part surface 14B remote from the molding surface. Finally a UV lamp 36 is disposed to the side of the Fresnel lens remote from the mold part so that incident UV radiation is directed at the Fresnel lens, and in particular the non-structured surface or side 12 thereof.

The Fresnel lens blank 10 is mounted on the lens blank support 32 and if desired secured thereto. A plurality of spacers 16, four as illustrated, and equally angularly spaced 90° from one another also as illustrated, are located on the mold part 16 and positioned at the periphery of the Fresnel lens blank 10 and extend in the same direction as the relief pattern or the structured surface 13 of the lens blank. A metered amount of the curable coating composition is deposited on the molding surface14A of the mold part 14 (see Fig. 3). The metered amount of the coating composition may be deposited as a plurality of individual drops.

Pressurized air is then supplied to the fluid accumulator 31 to inflate the inflatable balloon or bladder 35 which applies the desired light pressure to the mold and thereby ensures in association with the spacers 16 that the resulting coating is of the desired thickness. It goes without saying that such spacers in general or tape spacers in particular are optional as are the axial height and location of such spacers; other means may be employed to ensure in association with the light pressure the calibration of the thickness of the coating. After molding the coating composition is cured *in situ*. To this end the UV source 36 is turned on long enough to ensure the curing of the coating composition. After curing the pressurized air can be exhausted from the accumulator 31 through the air port 33 so that the mold part 14 and spacers 16 can be removed and the coated Fresnel blank lens withdrawn from the press coating apparatus.

Examples of the press coating process according to the invention and comparative examples will now be given.

### Example 1

A 4.0 base Fresnel lens blank of polycarbonate having a refractive index of 1.59 was injection molded. In the present example the Fresnel structure or the structured surface of the Fresnel lens blank was located on the convex side of a convex-concave lens blank (see Fig. 3). The Fresnel structure height of the structured surface of the Fresnel lens blank was 150 µm and the optical power of the Fresnel lens design in air was +6.0.

A corresponding 4.0 base glass mold part had a molding surface which matches the base curvature of the Fresnel lens stuctured surface. So-called spacer tape was used for defining the plurality of spacers between the mold part and the Fresnel lens blank. The spacer tape portions were applied to the edge of the glass mold part at circumferentially spaced locations and also to the edge of the Fresnel lens blank and served to calibrate the thickness of the coating composition in association with the application of light pressure by the air balloon or bladder. The spacer tape portions have an axial length of 0.30 mm, slightly greater than the desired thickness of the coating composition.

The coating composition was a UV curable low index coating solution formulation 311-83-L specified above and as shown in the above table has a refractive index of 1.50 after curing. A metered quantity of a total of 0.9 g of drops of the curable coating solution was deposited onto the molding surface of the glass mold part and then the Fresnel lens blank was carefully brought into contact with the drops of coating solution such that the coating solution spread over the entire lens-mold surface.

A light air ballon or bladder pressure of about 2 to 3 psi (or about 13.8 to 20.7 kPa) was applied to the non-structured surface of the Fresnel lens blank for better control of the thickness of the coating.

UV radiation from a Dymax UV lamp was then directed for 1 to 2 min. at the non-structured surface of the Fresnel lens side to cure the coating composition in situ. After UV curing of the coating composition, the glass mold part and spacers were removed to access and withdraw the cured coated Fresnel lens blank. The removal of the spacers from the lens blank at this point is optional in that they are located in the unused peripheral region of the lens blank which is in any event removed to adapt the lens blank to a particular eyeglass frame, in particular in the course edging.

The coating thickness was about 250 µm, reckoned from the 'free face' or peaks of the structured surface of the Fresnel lens. The coated lens provided a very good optical image and the surface roughness (Rq) of the coated Fresnel lens surface was less than 200 nm. The coating composition filled the spaces between the ridges of the structured surface and contained no trapped air bubbles or voids when checked by naked eye and under a microscope. Nor were there any ring void defects or other visible defects. The coated Fresnel lens had a Fresnel power of +1.0. The resulting coated Fresnel lens blank was fully compatible with conventional Rx or prescription surfacing or digital surfacing and edging, and hardcoating desiderata for obtaining the desired eyeglass lens prescription.

### Example 2

The modalities of this example were the same as those of Example 1, except as regards the axial length of the spacer tape portions which were approximately 650 µm to obtain a coating thickness of about 620 µm. The surface quality of the much thicker coating of Example 2 is even better than that of Example 1. The surface roughness was less than 100 nm and the optical quality was good, too.

### Example 3

The modalities of this example were the same as those of Example 1, except that the Fresnel lens bulk material was a high index polythiourethane (n_{D}=1.60). The polythiourethrane lens blank was of the same design as the polycarbonate Fresnel lens of Examples 1 and 2. The resulting coated Fresnel lens blank produced by the press coating process had the same good optical and cosmetic qualities as those of the coated lens blank of Example 1.

### Example 4

The modalities of this example were the same as those of Example 1, except the polycarbonate Fresnel lens blank had a lower Fresnel structure height of 80 µm and the axial length of the spacer tape was 0.150 mm or 150 µm. The coating thickness obtained by the press coating process is about 240 µm. The coated Fresnel lens blank had very good optical and cosmetic qualities. The Fresnel power was again +1.0.

### Comparative Examples 1-6

These examples were the same as Example 1 or Example 3, except as regards coating thicknesses and direction of the incident UV radiation and UV curable monomers. The resulting Fresnel lens blanks have either optical visual quality defects or cosmetic defects due to the coating resin shrinkage.

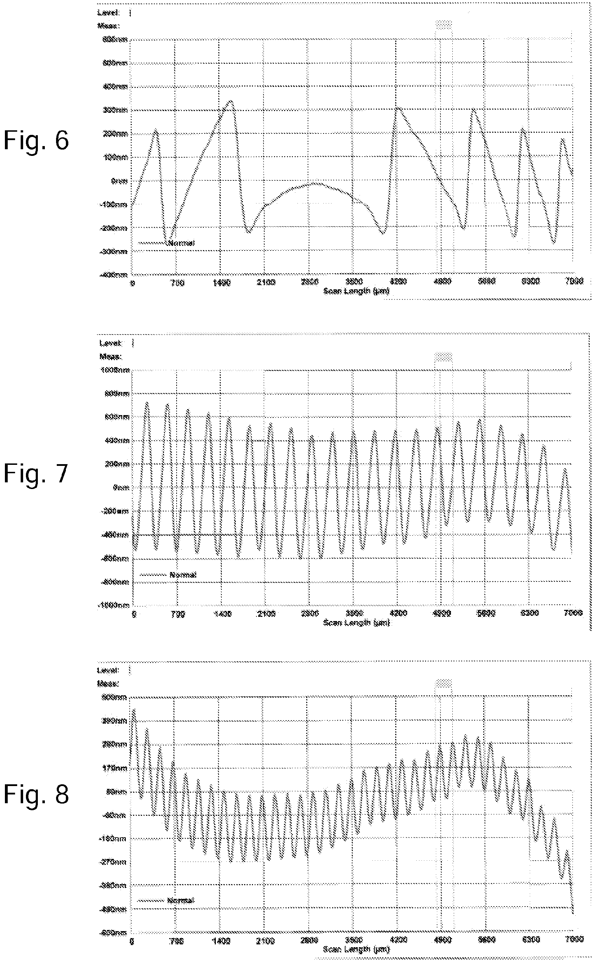

The surface roughness (Rq) of the coating surface of Comparative Example 1 is illustrated in the graph of Fig. 6 and the values are given in the table below, including a value of surface roughness (Rq) greater than 500 nm which is well in excess of acceptable values of surface roughness for an ophthalmic lens and is likely to negatively affect optical visual quality thereof.

The surface roughness (Rq) of the coating surface of Comparative Example 1, for limited 40 mm range of the lens blank, is illustrated in the graph of Fig. 7 with values of Rq consistently greater than 500 nm, well in excess of acceptable values of surface roughness for an ophthalmic lens and is likely to negatively affect optical visual quality thereof.

The surface roughness (Rq) of the coating surface of Comparative Example 2 for a Fresnel lens having a Fresnel structure height of 80 µm and a coating thickness above the structured surface of 90 µm is illustrated in the graph of Fig. 8, with values of Rq greater than 300 nm and with a pitch from peak to valley, well in excess of acceptable values of surface roughness for an ophthalmic lens and is likley to negatively affecting optical visual quality thereof.

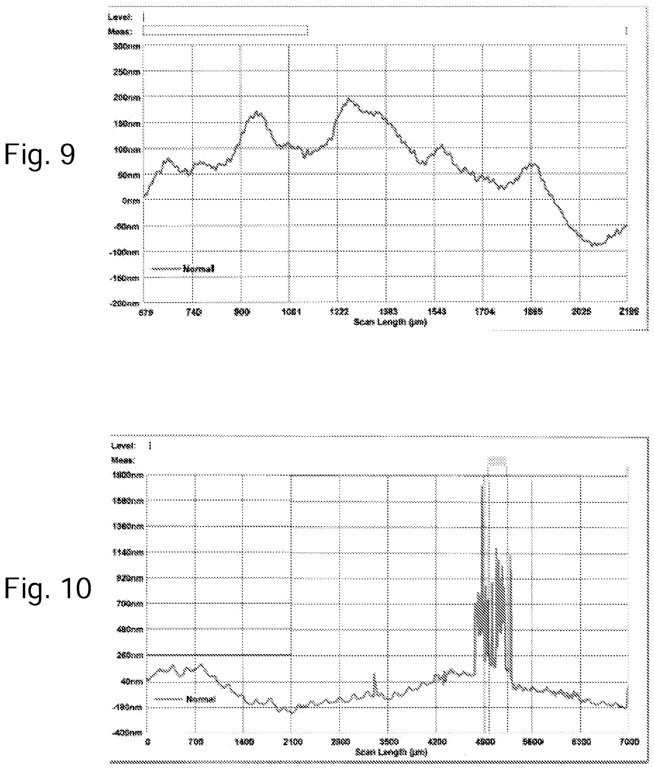

The surface roughness (Rq) of the coating surface of Example 1 according to the invention for a Fresnel lens having a Fresnel structure height of 120 µm and a coating thickness above the strucutured surface of 360 µm is illustrated in the graph of Fig. 9, with values of Rq less than 100 nm which is fully satisfactory for an ophthalmic lens to ensure good optical visual quality.

The surface roughness (Rq) of the coating surface for a limited peripheral range of 40mm of Fresnel lens blank of Example 4 having a Fresnel structure height of 80 µm and a coating thickness above the structured surface of 240 µm less than 200nm which is fully satisfactory for an opthalmic lens to ensure good optical visual quality of the Fresnel lens.

The conditions and results of Examples 1-4 and Comparative Examples 1-6 are enumerated in the following table:

| Exam Ple | Lens | Fresnel structure height | Cured Coating Liquid | Coating mass | Spacer axial height | Air balloon pressure | UV direction | UV lamp | Coating thickness | Coated Surface roughness (Height) | Coated Surface roughness (Width) | Optical visual quality | Coating cosmetic quality |
|---|---|---|---|---|---|---|---|---|---|---|---|---|---|
| Ex. 1 | PC | 120 µm | 1.5 | 0.9g | 300 µm | 0.207 Bar 0.207 Bar (3 psi) | Incident UV at Fresnel lens | Dymax | 250 µm | < 200 nm | >150µm | Good | Good |
| Ex. 2 | PC | 120 µm | 1.5 | 0.9g | 650 µm | 0.276 Bar (4 psi) | Incident UV at Fresnel lens | Dymax | 620 µm | < 100 nm | >1000µm | Good | Good |
| Ex. 3 | PU | 120 µm | 1.5 | 0.9g | 300 µm | 0207 Bar (3 psi) | Incident UV at Fresnel lens | Dymax | 350 µm | - | - | Good | Good |
| Ex. 4 | PC | 80 µm | 1.5 | 0.45g | 150 µm | 0.207 Bar (3 psi) | Incident UV at Fresnel lens | Dymax | 240 µm | < 200 nm | >150µm | Good | Good |
| Com. Ex. 1 | PC | 120 µm | 1.5 | 0.45g | 150 µm | 0.207 Bar (3 psi) | Incident UV at Fresnel lens | Dymax | 100 µm | > 500 nm | <50µm | Not good / Double image | Good |
| Com. Ex. 2 | PC | 80 µm | 1.5 | 0.3g | 0 | 0207 Bar (3 psi) | Incident UV at Fresnel lens | Dymax | 90 µm | > 300 nm | <50µm | Not good / Double image | Good |
| Com. Ex. 3 | PC | 120 µm | 1.5 | 0.9g | 300 µm | 0.207 Bar (3 psi) | Incident UV at Mold | Dymax | 250 µm | - | - | Good | Several ring voids on coatina |
| Com. Ex. 4 | PC | 120 µm | 1.5 | 0.9g | 300 µm | 0.207 Bar (3 psi) | Incident UV at Mold | Zenon | 250 µm | - | - | Good | Several ring voids on edge coatin_{G} |
| Com. Ex. 5 | PC | 120 µm | 1.51 | 0.9g | 300 µm | 0 | Incident UV at Mold | Dymax | 250 µm | - | - | Good | Several ring voids on edge coating |
| Com. Ex. 6 | PC | 120 µm | 1.5 | 0.9g | 300 µm | 0207 Bar (3 psi) | Incident UV at Mold | Dymax | 250 µm | - | - | Good | Several ring void; on edge coatinq |

According to another embodiment of the present invention the Fresnel lens blank may have a first coating of the type disclosed above with a thickness of greater than 1.5 times the Fresnel structure height of the structured surface and less than 5 times of the Fresnel structure height of the structured surface and in general thick enough to cover satisfactorily the structured surface and a second, overlying coating applied to the first coating for enhancing the optical and/or mechanical properties of the resulting double coated Fresnel lens blank.

Indeed to increase the optical power of the resulting double-coated Fresnel lens blank, the inner or underlying coating on the structured surface of the lens should have an index of refraction which may be lower than those described above which have a range between about 1.45 and about 1.55. Indeed there are coatings having an index of refraction of about 1.37 or 1.38 such as the UV curable solution MY-1375 available from MY-Polymer, Ltd., Moshav Beit-Elazari, Israel. Such a coating is intended for use as an adhesive and in any event does not have mechanical properties suitable for use as a face of an ophthalmic Fresnel lens or suitable for edging the lens to correspond to shape of the rims and edge configuration of the rims of a given eyeglass frame design.

According to this embodiment of the invention for use of a low and very low refractive index coating material having insufficient mechanical properties, such a low or very low refractive index coating material is applied with the press-coating method substantially as described above in connection with the first embodiment. However, given the properties of the MY-1375 coating material, like most UV cured acrylic resins, the polymerization of MY-1375 leaves a soft surface.

To obviate the problems which may be associated with the inadequate or unsatisfactory mechanical properties of the such a low or very low refractive index coating materials for coating the structured surface of a Fresnel lens blank, it has been found that coating (preferably by means of the same or substantially the same press coating process) this low or very low refractive index coating material with another coating material having inter alia better or superior mechanical properties for fabricating, handling and normal after-sale use and servicing the corresponding Fresnel lens as ophthalmic lenses adapted to be secured to or mounted in eyeglass frames.

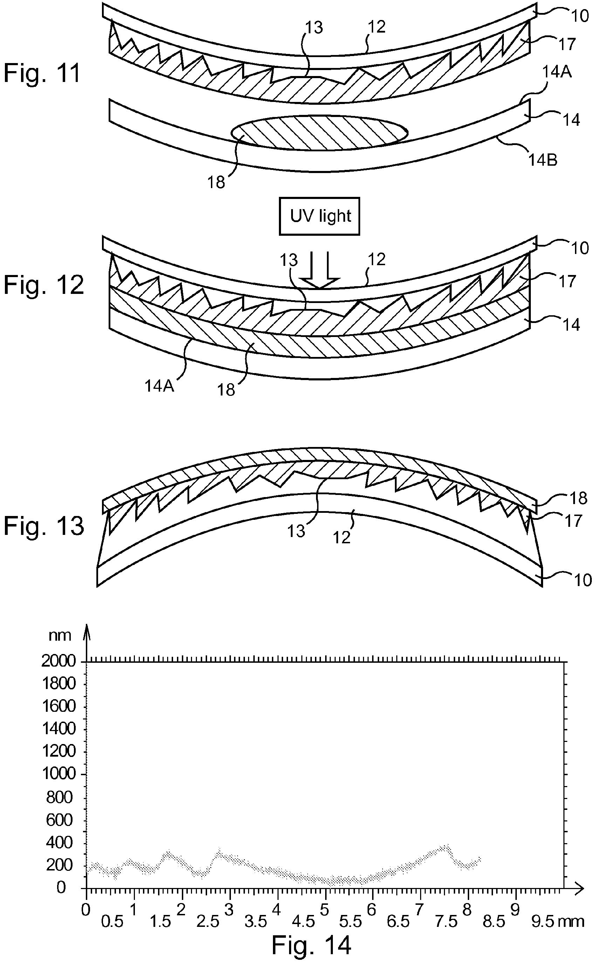

Figs. 11 to 13 illustrate additional steps of this second embodiment. In a manner corresponding to the first embodiment described above and illustrated in Fig. 3, the coating composition or solution (for the inner or underlying coating) having a low or preferably very low index of refraction after curing, such as MY-1375, is applied as drops (not shown) on to the face of a glass mold part 14 having a curvature corresponding to the base curvature of the structure of surface of the Fresnel lens. Then the structured surface of the Fresnel lens blank is lowered to come slowly into contact with the coating composition so that the composition spreads out over the entire Fresnel surface structure. The coating adhering to the structured surface of the Fresnel lens can then be cured by UV by directing the UV radiation through the non-structured face of the Fresnel lens blank opposite the structured surface thereof as described and illustrated in Figs. 3 and 4 of the first embodiment. The resulting single coated lens resulting from this first phase, preferably has a coating with the same geometrical features of the resulting Fresnel lens blank produced according to the first embodiment, including a coating thickness greater than 1.5 times the Fresnel structural height of the structured surface and less than 5 times of the Fresnel structure height of the structured surface. It has a surface smooth in terms of roughness (Rq) of about 150 nm. But the Fresnel lens blank obtained from the first phase of this second embodiment has a coating which may lack the requisite mechanical properties or surface roughness owing to the physical structure of the cured coating material and/or may lack an acceptable optical surface quality owing to shrinkage of the low/very low refractive index coating composition during photo-polymerization.

According to this second embodiment a second or overlying coating composition is applied to the first (preferably partially) cured coating composition which covers the structured face of the Fresnel lens. This second coat is applied by press coating in the arrangement highly schematically illustrated in Fig. 4. As illustrated in Fig. 11, the second coating composition is deposited (as drops, not shown) on a glass mold part 14 substantial the same as that used in the first phase of the second embodiment, so as to define a surface which has the same radius of curvature as the outer surface of the first or inner coating. The assembly comprising the Fresnel lens structure per se, the first partially cured coating, the second uncured coating and the mold part are positioned in substantially the same arrangement for pressing coating the second coating such as illustrated in Fig. 4B and the UV radiation is directed through the unstructured face of the Fresnel lens as illustrated in Fig. 12.

### Example 6: Fresnel Lens blank with a double coating, each coating having the same refractive index

A polycarbonate Fresnel lens structure is provided having the design having a 90° step angle; and flat Fresnel rings with a minimum height at center of 25 µm, a maximum height (at r = 34.77 mm) of 138.4 µm; and a first Fresnel ring having a diameter of 4.56 mm with a minimum step size of 500 µm and a base curve radius of 131.33 mm.

The structured surface of the Fresnel structure was coated by a UV curable acrylic formulation, namely the above-specified formulation 311-83-L with a refractive index of 1.50 when cured.

0.5g of 1.50 index coating composition or solution was deposited as drops on a glass mold part and a spacer tape with an axial height or length of 0.2 mm was put on the glass mold part as illustrated in Fig 5 to assist in controlling the coating thickness. Liquid drops of the coating composition or solution were slowly dropped so that the coating composition or solution spread on its own over the entire molding surface. The light air balloon pressure of 2-3 psi (or 13.8 to 20.7 kPa) was applied from the structured face of the Fresnel lens structure for assisting in controlling the thickness of the coating, and then UV light was directed from the unstructured side of the Fresnel lens structure to cure the coating composition for 1 to 2 minutes (see Fig. 4). The inner coating had a thickness of 200-300 µm. After UV curing, the glass mold part was removed to access the Fresnel lens with a first coating on the structure face thereof. Then the process was repeated in the same fashion to apply a second coating on the first coating. The total thickness of the two coatings was about 450 microns. The resulting Fresnel power of the doubled-coated Fresnel lens blank was the resulting outer surface of the second coating is very smooth as demonstrated by Dual side Lensmapper and FTS profile at Ø10mm area as shown in Fig.14. with a center roughness about 50 nm, much lower than 200 nm in the Example. 1.

### Example 7: Fresnel lens blank with double coating, the cured coating materials having different refractive indexes

A UV curable solution which is used for the first or inner coating has a very low index UV such as a fluorine based curable coating solution and in particular fluorine based curable coating solution MY-1375 available from MY-Polymer, Ltd. which has a refractive index of 1.38 after curing. The UV curable composition was applied into the glass mold part as shown in Fig. 3 to coat the structured face of the Fresnel lens made of polycarbonate. The Fresnel structure which was made by injection molding had a Fresnel power in air of +13.0. The Fresnel lens was then carefully applied against the low index liquid solution with a pressure in the range of 2 to 3 psi (or about 13.8 to 20.7 kPa) in the apparatus illustrated in Fig. 4B. The UV curable composition was then cured by UV light through the unstructured surface of the Fresnel structure for 30 - 60 seconds to obtain a cured coating. The coated Fresnel lens blank was then separated from the glass mold part. The resulting inner coating layer had a thickness of about 200 µm, that is a thickness reckoned from the peaks of the structured surface. The resulting optical power of the coated Fresnel lens blanks was measured at +2.50 by Nidek Lensmeter (LM-1200) owing to the larger difference in the refractive indexes of the polycarbonate (n_{D}=1.59) and MY-1375 (n_{D}=1.38).

The coating process was repeated to apply over the first or inner coating another UV curable coating solution having a different refractive index (n_{D}=1.50) and harder and tougher when cured, namely coating formulation 311-83-L identified above. 30 drops of second UV curable coating solution was applied to the first cured coating and the second coating liquid was cured (while the curing of the first coating was being completed) with UV light for 2 minutes to form a double coating, as shown in Fig.12. After curing the second coating, the glass mold part was removed. The resulting double-coated Fresnel lens blank, shown in Fig. 13, had a hard coated Fresnel surface. The resulting Fresnel lens blank had both a higher Fresnel power (+2.50) and better mechnical properties suitable for use an as ophthalmic lens, including its ability to be contoured and edged to fit the eyeglass rim and for normal use and service. Owing to the difference between the very low index of refraction (n_{D}=1.38) of the inner coating material and the higher index of refraction of the Fresnel lens substrate (polycarbonate, n_{D}=1.59), the ultimate Fresnel power was boosted to +2.50, while the overlay of 1.50 index coating did not contribute to optical power.

To ensure better adhesion between first coating and second coating, the first coating may be initially cured for a shorter time than necessary for full curing of the coating and the second coating was cured long enough to ensure full curing of the second coating and good adherence between the coatings.

The resulting cured double-coated Fresnel lens blank of this example can be Rx or prescription surfaced and HMC coated without any delamination problems.

The present invention is not intended to be limited to the embodiements described herein but on the contrary is intended to extend to Fresnel lens coating processes and the resulting coated Fresnel lens within the scope of the appended claims.

## Claims

1. A method for coating a Fresnel lens blank comprising providing an uncoated Fresnel lens blank (10) having a structured surface (13) and a non-structured surface (12), providing a transparent mold part (14) having molding surface (14A) substantially matching the base curvature of the Fresnel lens blank (10), depositing a metered quantity of coating resin between the molding surface (14A) and the structured surface (13) of the Fresnel lens blank (10), applying pressure between the Fresnel lens blank (10) and the mold part (14) while maintaining the distance between the molding surface (14A) and the structure surface (13), the thickness of the coating is greater than 1.5 times the Fresnel structure height of the structured surface (13) and less than 5 times of the Fresnel structure height of the structured surface (13) and the resin coating is cured in situ by directing the incident UV radiation at the Fresnel lens blank (10); **characterized in that** the incident UV radiation is directed at the non-structured surface of the Fresnel lens by a UV lamp disposed on the side of the Fresnel lens remote from the mold part, and not on the mold side.

2. A method for coating a Fresnel lens blank according to claim 1, wherein the pressure applied between the mold and the Fresnel lens blank (10) is between about 13.8 to 34.5 kPa.

3. A method for coating a Fresnel lens blank according to claim 1 or 2, wherein the thickness of the coating is between about 1.5 times the Fresnel structure height and about 3 times the Fresnel structure height.

4. A method for coating a Fresnel lens blank according to claim 1, 2 or 3, wherein the coating thickness is between about 75 and about 750 µm.

5. A method for coating a Fresnel lens blank according to any one of the preceding claims, wherein the Fresnel structure height of the Fresnel lens blank (10) is between about 20µm and about 500µm.

6. A method for coating a Fresnel lens blank according to any one of the preceding claims, wherein a plurality of circumferentially spacers (16) are disposed between the mold and the Fresnel lens blank (10) and have an axial thickness between about 100 to about 800 µm and an axial length between about 150 µm and about 600µm.

7. A method for coating a Fresnel lens blank according to any one of the preceding claims, wherein the difference in the refractive index of the Fresnel lens bulk material and the cured coating material is greater than about 0.05, and preferably greater than about 0.15, or preferably between about 0.08 and about 0.40.

8. A method for coating a Fresnel lens blank according to any one of the preceding claims, wherein the refractive index of the cured coating material is between 1.38 and 1.55 and the refractive index of the bulk material of the Fresnel lens blank (10) is between 1.59 and 1.74.

9. A method for coating a Fresnel lens blank according to any one of the preceding claims, wherein the coating formulations are UV curable compounds selected from the group consisting of UV curable (meth) acrylic compounds, epoxy acrylic compounds, epoxy compounds, polyurethane acrylic compounds, and any mixture of the aforesaid compounds, and fluorinated (meth) acrylic compounds, such as MY-1373.

10. A method for coating a Fresnel lens blank according to any one of the preceding claims, wherein the Fresnel lens bulk material is a thermoplastic polycarbonate or a thermosetting polymer formed by curing compounds comprising thiourethane group(s) and/or episulfur group(s).

11. A method according to any one of the preceding claims, wherein the aforesaid coating is an inner coating, and said inner coating is coated with another curable coating material to provide an overlying coating having superior mechanical properties and/or superior surface smoothness compared with the inner coating,

12. A method according to claim 11, wherein the cured inner coating has an index of refraction between about 1.38 and about 1.55.

13. A method for coating a Fresnel lens blank according to claim 11 or 12, wherein the difference in the refractive indexes of the cured inner coating material and the cured overlying coating material is equal to or less than about 0.30, and preferably equal to or less than about 0.15.

14. A method for coating a Fresnel lens blank according to any one of the preceding claims, wherein the difference in the refractive index of the Fresnel lens bulk material and the cured coating material applied to the Fresnel structure is greater than about 0.10, and preferably greater than about 0.15.

15. A method according to any one of claims 11 to 14, wherein a metered quantity of coating material for the overlying coating is deposited between the inner coating and a molding surface of a mold part, and pressure is applied between the Fresnel lens blank (10) and the mold part (14) while maintaining the distance between the molding surface (14A) and the inner coating.

16. A method according to any one of claims 11 to 15, wherein the elastic modulus of the inner coating material is greater than 4 mPa, and the elastic modulus of the outer coating material is greater than about 200 mPa.

17. A method according to any one of claims 11 to 16, wherein the thickness of the outer coating is between about 5 microns and about 100 microns.

18. A method for coating a Fresnel lens blank according to any one of the preceding claims, wherein the coating formulation is UV curable fluorinated acrylate compound, such as MY-1375.

19. A method for coating a Fresnel lens blank according to any one of the preceding claims, wherein the peak-to-valley distance of the outer surface of the inner coating is less than about 200 nm.

20. A method for coating a Fresnel lens blank according to any one of the preceding claims, wherein the peak-to-valley distance or waviness of the outer surface of the inner coating is greater than about 1 micron and the refractive indexes of the inner coating material and overlying coating material are substantially equal.

## Patentansprüche

1. Verfahren zur Beschichtung eines Fresnel-Linsen-Rohlings, umfassend Bereitstellen eines unbeschichteten Fresnel-Linsen-Rohlings (10) mit einer strukturierten Oberfläche (13) und einer nichtstrukturierten Oberfläche (12), Bereitstellen eines transparenten Formwerkzeugteils (14) mit einer Formoberfläche (14A), die der Grundkrümmung des Fresnel-Linsen-Rohlings (10) im Wesentlichen entspricht, Aufbringen einer dosierten Menge Beschichtungsharz zwischen der Formoberfläche (14A) und der strukturierten Oberfläche (13) des Fresnel-Linsen-Rohlings (10), Anlegen von Druck zwischen dem Fresnel-Linsen-Rohling (10) und dem Formwerkzeugteil (14), wobei der Abstand zwischen der Formoberfläche (14A) und der Strukturoberfläche (13) gehalten wird, wobei die Dicke der Beschichtung größer als 1,5-mal der Fresnel-Strukturhöhe der strukturierten Oberfläche (13) und weniger als 5-mal der Fresnel-Strukturhöhe der strukturierten Oberfläche (13) ist und die Harzbeschichtung *in situ* gehärtet wird, indem einfallende UV-Strahlung auf den Fresnel-Linsen-Rohling (10) gerichtet wird; **dadurch gekennzeichnet, dass** die einfallende UV-Strahlung durch eine UV-Lampe, die an der von dem Formwerkzeugteil entfernten Seite der Fresnel-Linse und nicht an der Formwerkzeugseite angeordnet ist, auf die nichtstrukturierte Oberfläche der Fresnel-Linse gerichtet wird.

2. Verfahren zur Beschichtung eines Fresnel-Linsen-Rohlings gemäß Anspruch 1, wobei der zwischen dem Formwerkzeug und dem Fresnel-Linsen-Rohling (10) angelegte Druck zwischen etwa 13,8 und 34,5 kPa beträgt.

3. Verfahren zur Beschichtung eines Fresnel-Linsen-Rohlings gemäß Anspruch 1 oder 2, wobei die Dicke der Beschichtung zwischen etwa 1,5-mal der Fresnel-Strukturhöhe und etwa 3-mal der Fresnel-Strukturhöhe beträgt.

4. Verfahren zur Beschichtung eines Fresnel-Linsen-Rohlings gemäß Anspruch 1, 2 oder 3, wobei die Beschichtungsdicke zwischen etwa 75 und 750 µm beträgt.

5. Verfahren zur Beschichtung eines Fresnel-Linsen-Rohlings gemäß einem der vorstehenden Ansprüche, wobei die Fresnel-Strukturhöhe des Fresnel-Linsen-Rohlings (10) zwischen etwa 20 µm und 500 µm beträgt.

6. Verfahren zur Beschichtung eines Fresnel-Linsen-Rohlings gemäß einem der vorstehenden Ansprüche, wobei eine Vielzahl von umlaufenden Abstandselementen (16) zwischen dem Formwerkzeug und dem Fresnel-Linsen-Rohling (10) angeordnet ist und eine axiale Dicke zwischen etwa 100 und etwa 800 µm und eine axiale Länge zwischen etwa 150 µm und etwa 600 µm aufweist.

7. Verfahren zur Beschichtung eines Fresnel-Linsen-Rohlings gemäß einem der vorstehenden Ansprüche, wobei der Unterschied der Brechungsindizes des Fresnel-Linsen-Grundmaterials und des gehärteten Beschichtungsmaterials größer als etwa 0,05 ist, vorzugsweise größer als etwa 0,15, oder vorzugsweise zwischen etwa 0,08 und etwa 0,40 beträgt.

8. Verfahren zur Beschichtung eines Fresnel-Linsen-Rohlings gemäß einem der vorstehenden Ansprüche, wobei der Brechungsindex des gehärteten Beschichtungsmaterials zwischen 1,38 und 1,55 beträgt und der Brechungsindex des Grundmaterials des Fresnel-Linsen-Rohlings (10) zwischen 1,59 und 1,74 beträgt.

9. Verfahren zur Beschichtung eines Fresnel-Linsen-Rohlings gemäß einem der vorstehenden Ansprüche, wobei die Beschichtungsformulierungen UV-härtbare Verbindungen ausgewählt aus der Gruppe bestehend aus UV-härtbaren (Meth)acrylverbindungen, Epoxyacrylverbindungen, Epoxyverbindungen, Polyurethanacrylverbindungen und beliebigen Gemischen der genannten Verbindungen sowie fluorierten (Meth)acrylverbindungen, wie z. B. MY-1373, sind.

10. Verfahren zur Beschichtung eines Fresnel-Linsen-Rohlings gemäß einem der vorstehenden Ansprüche, wobei das Fresnel-Linsen-Grundmaterial ein thermoplastisches Polycarbonat oder ein wärmehärtendes Polymer ist, das durch Härten von Verbindungen, die Thiourethangruppen und/oder Epischwefelgruppen umfassen, gebildet ist.

11. Verfahren gemäß einem der vorstehenden Ansprüche, wobei die genannte Beschichtung eine innere Beschichtung ist und die innere Beschichtung mit einem weiteren härtbaren Beschichtungsmaterial beschichtet ist, um eine darüberliegende Beschichtung mit besseren mechanischen Eigenschaften und/oder besserer Oberflächenglätte im Vergleich zu der inneren Beschichtung zu erhalten.

12. Verfahren gemäß Anspruch 11, wobei die gehärtete innere Beschichtung einen Brechungsindex von zwischen etwa 1,38 und 1,55 aufweist.

13. Verfahren zur Beschichtung eines Fresnel-Linsen-Rohlings gemäß Anspruch 11 oder 12, wobei der Unterschied der Brechungsindizes der gehärteten inneren Beschichtung und des gehärteten darüberliegenden Beschichtungsmaterials gleich oder kleiner als etwa 0,30 ist, vorzugsweise gleich oder kleiner als etwa 0,15.

14. Verfahren zur Beschichtung eines Fresnel-Linsen-Rohlings gemäß einem der vorstehenden Ansprüche, wobei der Unterschied der Brechungsindizes des Fresnel-Linsen-Grundmaterials und des gehärteten Beschichtungsmaterials, das auf die Fresnel-Struktur aufgebracht ist, größer als etwa 0,10 ist, vorzugsweise größer als etwa 0,15.

15. Verfahren gemäß einem der Ansprüche 11 bis 14, wobei eine dosierte Menge Beschichtungsmaterial für die darüberliegende Beschichtung zwischen der inneren Beschichtung und einer Formoberfläche eines Formwerkzeugteils aufgebracht wird und Druck zwischen dem Fresnel-Linsen-Rohling (10) und dem Formwerkzeugteil (14) angelegt wird, wobei der Abstand zwischen der Formoberfläche (14A) und der inneren Beschichtung gehalten wird.

16. Verfahren gemäß einem der Ansprüche 11 bis 15, wobei der Elastizitätsmodul des inneren Beschichtungsmaterials größer als 4 mPa ist und der Elastizitätsmodul des äußeren Beschichtungsmaterials größer als etwa 200 mPa ist.

17. Verfahren gemäß einem der Ansprüche 11 bis 16, wobei die Dicke der äußeren Beschichtung zwischen etwa 5 Mikrometer und etwa 100 Mikrometer beträgt.

18. Verfahren zur Beschichtung eines Fresnel-Linsen-Rohlings gemäß einem der vorstehenden Ansprüche, wobei die Beschichtungsformulierung eine UV-härtbare fluorierte Acrylatverbindung ist, wie z. B. MY-1375.

19. Verfahren zur Beschichtung eines Fresnel-Linsen-Rohlings gemäß einem der vorstehenden Ansprüche, wobei der Spitze-zu-Tal-Abstand der Außenoberfläche der inneren Beschichtung weniger als etwa 200 nm beträgt.

20. Verfahren zur Beschichtung eines Fresnel-Linsen-Rohlings gemäß einem der vorstehenden Ansprüche, wobei der Spitze-zu-Tal-Abstand oder die Welligkeit der Außenoberfläche der inneren Beschichtung mehr als etwa 1 Mikrometer beträgt und die Brechungsindizes des inneren Beschichtungsmaterials und des darüberliegenden Beschichtungsmaterials im Wesentlichen gleich sind.

## Revendications

1. Procédé de revêtement d'une ébauche de lentille de Fresnel comprenant la fourniture d'une ébauche de lentille de Fresnel non revêtue (10) ayant une surface structurée (13) et une surface non structurée (12), la fourniture d'une partie de moule transparente (14) ayant une surface de moulage (14A) correspondant sensiblement à la courbure de base de l'ébauche de lentille de Fresnel (10), le dépôt d'une quantité dosée de résine de revêtement entre la surface de moulage (14A) et la surface structurée (13) de l'ébauche de lentille de Fresnel (10), l'application d'une pression entre l'ébauche de lentille de Fresnel (10) et la partie de moule (14) tout en maintenant la distance entre la surface de moulage (14A) et la surface structurée (13), l'épaisseur du revêtement étant supérieure à 1,5 fois la hauteur de la structure de Fresnel de la surface structurée (13) et inférieure à 5 fois la hauteur de la structure de Fresnel de la surface structurée (13) et le revêtement de résine étant durci in situ en dirigeant le rayonnement UV incident au niveau de l'ébauche de lentille de Fresnel (10) ; **caractérisé en ce que** le rayonnement UV incident est dirigé au niveau de la surface non structurée de la lentille de Fresnel par une lampe UV disposée sur le côté de la lentille de Fresnel à distance de la partie de moule, et non sur le côté moule.

2. Procédé de revêtement d'une ébauche de lentille de Fresnel selon la revendication 1, la pression appliquée entre le moule et l'ébauche de lentille de Fresnel (10) étant comprise entre environ 13,8 et 34,5 kPa.

3. Procédé de revêtement d'une ébauche de lentille de Fresnel selon la revendication 1 ou 2, l'épaisseur du revêtement étant comprise entre environ 1,5 fois la hauteur de la structure de Fresnel et environ 3 fois la hauteur de la structure de Fresnel.

4. Procédé de revêtement d'une ébauche de lentille de Fresnel selon la revendication 1, 2 ou 3, l'épaisseur de revêtement étant comprise entre environ 75 et environ 750 µm.

5. Procédé de revêtement d'une ébauche de lentille de Fresnel selon l'une quelconque des revendications précédentes, la hauteur de la structure de Fresnel de l'ébauche de lentille de Fresnel (10) étant comprise entre environ 20 µm et environ 500 µm.

6. Procédé de revêtement d'une ébauche de lentille de Fresnel selon l'une quelconque des revendications précédentes, une pluralité d'éléments d'espacement circonférentiels (16) étant disposés entre le moule et l'ébauche de lentille de Fresnel (10) et ayant une épaisseur axiale comprise entre environ 100 et environ 800 µm et une longueur axiale comprise entre environ 150 µm et environ 600 µm.

7. Procédé de revêtement d'une ébauche de lentille de Fresnel selon l'une quelconque des revendications précédentes, la différence dans l'indice de réfraction du matériau brut de lentille de Fresnel et du matériau de revêtement durci étant supérieure à environ 0,05, et de préférence supérieure à environ 0,15, ou de préférence entre environ 0,08 et environ 0,40.

8. Procédé de revêtement d'une ébauche de lentille de Fresnel selon l'une quelconque des revendications précédentes, l'indice de réfraction du matériau de revêtement durci étant compris entre 1,38 et 1,55 et l'indice de réfraction du matériau brut de l'ébauche de lentille de Fresnel (10) étant compris entre 1,59 et 1,74.

9. Procédé de revêtement d'une ébauche de lentille de Fresnel selon l'une quelconque des revendications précédentes, les formulations de revêtement étant des composés durcissables aux UV choisis dans le groupe constitué par les composés (méth)acryliques durcissables aux UV, des composés époxy acryliques, des composés époxy, des composés acryliques de polyuréthane, et tout mélange des composés susmentionnés, et des composés (méth)acryliques fluorés, tels que MY-1373.

10. Procédé de revêtement d'une ébauche de lentille de Fresnel selon l'une quelconque des revendications précédentes, le matériau brut de lentille de Fresnel étant un polycarbonate thermoplastique ou un polymère thermodurcissable formé par durcissement de composés comprenant un ou des groupes thio-uréthanes et/ou un ou des groupes épisulfures.

11. Procédé selon l'une quelconque des revendications précédentes, le revêtement susmentionné étant un revêtement interne, et ledit revêtement interne étant revêtu d'un autre matériau de revêtement durcissable pour fournir un revêtement de recouvrement ayant des propriétés mécaniques supérieures et/ou une régularité de surface supérieure par rapport au revêtement interne.

12. Procédé selon la revendication 11, le revêtement interne durci ayant un indice de réfraction compris entre environ 1,38 et environ 1,55.

13. Procédé de revêtement d'une ébauche de lentille de Fresnel selon la revendication 11 ou 12, la différence des indices de réfraction du matériau de revêtement interne durci et du matériau de revêtement de recouvrement durci étant égale ou inférieure à environ 0,30, et de préférence égale ou inférieure à environ 0,15.

14. Procédé de revêtement d'une ébauche de lentille de Fresnel selon l'une quelconque des revendications précédentes, la différence dans l'indice de réfraction du matériau brut de lentille de Fresnel et du matériau de revêtement durci appliquée à la structure de Fresnel étant supérieure à environ 0,10, et de préférence supérieure à environ 0,15.

15. Procédé selon l'une quelconque des revendications 11 à 14, une quantité dosée de matériau de revêtement pour le revêtement de recouvrement étant déposée entre le revêtement interne et une surface de moulage d'une partie de moule, et une pression étant appliquée entre l'ébauche de lentille de Fresnel (10) et la partie de moule (14) tout en maintenant la distance entre la surface de moulage (14A) et le revêtement interne.

16. Procédé selon l'une quelconque des revendications 11 à 15, le module élastique du matériau de revêtement interne étant supérieur à 4 mPa, et le module élastique du matériau de revêtement externe étant supérieur à environ 200 mPa.

17. Procédé selon l'une quelconque des revendications 11 à 16, l'épaisseur du revêtement externe étant comprise entre environ 5 microns et environ 100 microns.

18. Procédé de revêtement d'une ébauche de lentille de Fresnel selon l'une quelconque des revendications précédentes, la formulation de revêtement étant un composé d'acrylate fluoré durcissable aux UV, tel que MY-1375.

19. Procédé de revêtement d'une ébauche de lentille de Fresnel selon l'une quelconque des revendications précédentes, la distance de crête à creux de la surface externe du revêtement interne étant inférieure à environ 200 nm.

20. Procédé de revêtement d'une ébauche de lentille de Fresnel selon l'une quelconque des revendications précédentes, la distance de crête à creux ou l'ondulation de la surface externe du revêtement interne étant supérieure à environ 1 micron et les indices de réfraction du matériau de revêtement interne et du matériau de revêtement de recouvrement étant sensiblement égaux.
